# EUROPÄISCHE PATENTSCHRIFT

(11) **EP 1 031 394 B1**
(45) Veröffentlichungstag und Bekanntmachung des Hinweises auf die Patenterteilung: **06.02.2002**
(21) Anmeldenummer: 99122613.5
(22) Anmeldetag: 13.11.1999
(51) Int. Cl.: B23B 31/10, B23B 31/26, B23B 31/30

(54) **Löseeinheit einer Vorrichtung zum Betätigen eines Spannkopfes**
Releasing unit of clamping head operating device
Dispositif de découplement d'un dispositf d'actionnement d'une tête de serrage

(30) Priorität: 27.02.1999 DE 19908545
(43) Veröffentlichungstag der Anmeldung: 30.08.2000
(73) Patentinhaber: Röhm GmbH, 89567 Sontheim (DE)
(72) Erfinder: Hangleiter, Eugen, 89568 Hermaringen (DE)
(74) Vertreter: Hentrich, Swen Dipl.-Phys. Dr.

(56) Entgegenhaltungen:
- DE-A- 19 636 594

## Beschreibung

Die Erfindung betrifft eine Löseeinheit einer Vorrichtung zum Betätigen eines in einer Arbeitsspindel geführten, durch eine Zugstange in axialer Richtung der Arbeitsspindel verstellbaren Spannkopfes, mit einem der Verstellung der Zugstange dienenden Kolben, mit einem Gehäusedeckel und einem gegenüber dem Gehäusedeckel verschiebbaren Gehäuse, an dem mindestens ein Verriegelungselement angeordnet ist, das mit Spiel in eine Aufnahme eines mit der Arbeitsspindel verbundenen Kupplungsringes einsetzbar ist.

Eine derartige Löseeinheit ist aus der DE 196 36 594 A1 bekannt. Diese Löseeinheit kann über das Verriegelungselement, das aus einer Verriegelungsstellung, in der es mit dem an der Arbeitsspindel angeordneten Kupplungsring in Eingriff steht, in eine Lösestellung ohne Eingriff verstellt werden, so daß die Löseeinheit von der Arbeitsspindel getrennt und wieder an dieser befestigt werden kann. Wird die Löseeinheit über den Kupplungsring mit der Arbeitsspindel verbunden, so wird das Verriegelungselement in die Verriegelungsstellung überführt, in der das Verriegelungselement an der Wandung der Aufnahme anliegt. In diesem Zustand kann nun durch Betätigung des Spannkopfes ein Werkstück oder ein Werkzeug gespannt werden, wozu in der Löseeinheit der Kolben axial verstellt wird und zur Anlage an den Gehäusedeckel kommt. Nach erfolgter Spannung kann die Arbeitsspindel in Rotation versetzt werden. Um dabei zu verhindern, daß die Löseeinheit mit rotieren muß und um eine strikte Trennung zwischen drehenden und stehenden Bauteilen zu erreichen, wird das Gehäuse durch Druckfedern gegenüber dem Gehäusedeckel verstellt, so daß das Verriegelungselement das Spiel in der Aufnahme ausnutzen kann und den Kontakt mit der Wandung verliert. Zum Lösen der Spannung des Werkzeugs oder Werkstücks wird der Kolben in die entgegengesetzte Richtung verstellt, wobei das Verriegelungselement sich wieder der Wandung der Aufnahme anlegt, so daß durch dieses über das Verriegelungselement und den Kupplungsring bewirkte Gegenhalten die Spindellagerung der Arbeitsspindel keine vom Kolben ausgeübte Lösekräfte aufnehmen muß. Allerdings ist die Spindellagerung auch nicht völlig kräftefrei, da die Spindellagerung zumindest die Kräfte der zur Verstellung des Gehäuse notwendigen Druckfedern aufnehmen muß.

Der Erfindung liegt die Aufgabe zugrunde, eine Löseeinheit der eingangs genannten Art so auszubilden, daß die nachteilige Wirkung der zur Verstellung des Verriegelungselementes in der Aufnahme vorgesehenen Druckfedern auf die Spindellagerung vermieden werden kann. Weiterhin ist Aufgabe der Erfindung, ein Verfahren anzugeben, wie ohne negative Auswirkung auf die Spindellagerung eine gegenseitige Verstellung der Bauteile der Löseeinheit durchgeführt werden kann.

Diese Aufgabe wird bei einer Löseeinheit der eingangs genannten Art dadurch gelöst, daß der Kolben eine erste, zur Anlage an den Gehäusedeckel kommende Anschlagfläche und eine zweite, als Anschlag für das Gehäuse dienende Anschlagfläche aufweist, und daß der Abstand der ersten Anschlagfläche und der zweiten Anschlagfläche so bemessen ist, daß bei anliegendem Gehäusedeckel und anliegendem Gehäuse das Verriegelungselement in der Aufnahme eine Mittenstellung einnimmt.

Diese erfindungsgemäße Löseeinheit bietet den Vorteil, daß auf die Druckfedern zur Verstellung des Verriegelungselementes gegenüber der Aufnahme vollständig verzichtet werden kann, weil der Gehäusedeckel als fester Bezugspunkt genutzt wird, dem gegenüber der Kolben bis zum Kontakt mit seiner ersten Anschlagfläche verstellt werden kann und dann wiederum gegenüber dem Gehäusedeckel als festen Bezugspunkt die Verstellung des Gehäuses mit dem Verriegelungselement erfolgt, bis der Kontakt des Gehäuses mit der zweiten Anschlagfläche hergestellt ist. Dies gewährleistet auch, daß das Verriegelungselement eine definierte Position in der Aufnahme einnimmt, die nicht lediglich durch Federkräfte bestimmt ist, so daß Ermüdungserscheinungen von Druckfedern nicht die Zuverlässigkeit der Löseeinheit beeinträchtigen können.

Da in der Regel der Kolben über Druckmittel verstellt wird, ist eine bevorzugte Ausführungsform der Erfindung derart gestaltet, daß in dem Gehäuse eine Zylinderkammer ausgebildet ist, an der der Kolben mit einem Kolbenbund dichtend anliegt, und daß an dem Kolbenbund die zweite Anschlagfläche ausgebildet ist. Bei dieser Ausführungsform wird in besonders eleganter Weise lediglich durch Druckbeaufschlagung eines Druckmittelanschlusses der Kolben gegenüber dem Gehäusedeckel verstellt, bis die erste Anschlagfläche eine weitere axiale Verschiebung verhindert, wobei infolge des angelegten Druckes in der Zylinderkammer auch das Gehäuse gegenüber dem Gehäusedeckel verschoben wird, bis diese Verschiebung durch den Kolbenbund mit seiner zweiten Anschlagfläche gestoppt wird.

Hinsichtlich der Einfachheit des Aufbaus der Löseeinheit hat es sich als zweckmäßig gezeigt, wenn der Kolben durch die Stirnseite des Gehäuses geführt ist und wenn an dem aus dem Gehäuse herausreichenden Teil des Kolbens die erste Anschlagfläche ausgebildet ist.

Günstig ist es weiterhin, wenn der Gehäusedeckel das Gehäuse mit einem Führungsbund übergreift, an dem auf der radial innenliegenden Seite eine Führungsfläche für das Gehäuse ausgebildet ist, da so der Gehäusedeckel in baulich einfacher Gestaltung auch gegenüber dem Gehäuse bei seiner dem Kolben entgegengesetzten axialen Verstellung als Referenzpunkt dienen kann und zugleich eine Führung für das Gehäuse bietet.

Um die Lage des Verriegelungselementes in der Aufnahme nicht über den Kontakt der zweiten Anschlagflächen mit dem Gehäuse zu definieren, ist es im Rahmen der Erfindung möglich, daß im Führungsbund eine in Umfangsrichtung verlaufende Ringnut ausgebildet ist, in die das Gehäuse mit einem Kranz eingreift.

Um die zwischen Gehäuse und Gehäusedeckel ausgebildete Führungsfläche nicht zu beeinträchtigen, sind an der Stirnseite des Gehäuses die Druckmittelanschlüsse für die Zylinderkammer angeschlossen, die durch den Gehäusedeckel nach außen geführt sind.

Um die korrekte Spannung überwachen zu können und weiterhin sicherzustellen, daß das Verriegelungselement die gewünschte Mittenstellung einnimmt, bildet eine an der Zugstange durch einen ein Langloch der Arbeitsspindel durchsetzenden Stift angeschlossene Scheibe die Referenzlage für einen dem Gehäuse zugeordneten Lagesensor.

Der das Verfahren betreffenden Teil der der Erfindung zugrunde liegenden Aufgabe wird gelöst durch ein Verfahren zum Spannen eines Werkstücks oder eines Werkzeugs mittels eines in einer Arbeitsspindel geführten Spannkopfes, der durch eine Zugstange in axialer Richtung des Arbeitsspindel verstellt wird, wenn ein der Verstellung der Zugstange dienender Kolben seinerseits in einer in einem Gehäuse ausgebildeten und Druckmittelanschlüsse aufweisenden Zylinderkammer verstellt wird, umfassend die Schritte:

Beaufschlagung des ersten Druckmittelanschlusses und Verschieben des Kolbens gegenüber dem Gehäuse und dem Gehäusedeckel bis dieser mit einer ersten Anschlagfläche an dem Gehäusedeckel zur Anlage kommt und Verschieben des Gehäuses gegenüber dem Kolben und dem Gehäusedeckel durch fortgesetzte Druckbeaufschlagung des ersten Druckmittelanschlusses bis das Gehäuse an einer zweiten an dem Kolben ausgebildeten Anschlagfläche zur Anlage kommt und ein an dem Gehäuse angeschlossenes Verriegelungselement als Teil einer Löseeinheit in einer Aufnahme eines mit der Arbeitsspindel verbundenen Kupplungsringes eine Mittenstellung einnimmt. Dieses Verfahren nutzt den durch den festen Gehäusedeckel gegebenen Referenzpunkt aus, um durch einfache Druckbeaufschlagung eines der Druckmittelanschlüsse der Zylinderkammer die in einander entgegen gesetzte axiale Verstellung sowohl des Kolbens als auch des Gehäuses zu bewirken bis diese durch die erste Anschlagfläche und die zweite Anschlagfläche definierte Lagen erreicht haben. Bemerkenswert ist dabei, daß sowohl die Verstellung des Kolbens gegenüber dem Gehäusedeckel als auch die Verstellung des Gehäuses gegenüber dem Gehäusedeckel ohne zusätzliche Bauteile wie Druckfedern oder ähnliches lediglich durch einfache Druckbeaufschlagung eines einzigen Druckmittelanschlusses erfolgt.

Ein Verfahren zum Lösen eines nach dem zuvor geschilderten Verfahren gespannten Werkstücks oder Werkzeugs ist dadurch gekennzeichnet, daß der zweite Druckmittelanschluß mit Druck beaufschlagt wird, sich der Kolben aus seiner Anlage mit der ersten Anschlagfläche und der zweiten Anschlagfläche an dem Gehäusedeckel und dem Gehäuse löst und das Verriegelungselement durch Verstellung des Gehäuses gegenüber dem Gehäusedeckel in der Aufnahme zur Anlage kommt.

Im folgenden wird die Erfindung an einem in der Zeichnung dargestellten Ausführungsbeispiel näher erläutert; es zeigen:
- Fig. 1: die erfindungsgemäße Löseeinheit mit dem in der Aufnahme eingesetzten, in der Verriegelungsstellung befindlichen Verriegelungselement, wenn durch den Spannkopf kein Werkzeug oder Werkstück gespannt ist, und
- Fig. 2: eine der Fig. 1 entsprechende Darstellung bei durch Verschiebung des Kolbens betätigtem Spannkopf zur Spannung eines Hohlschaftkegels.

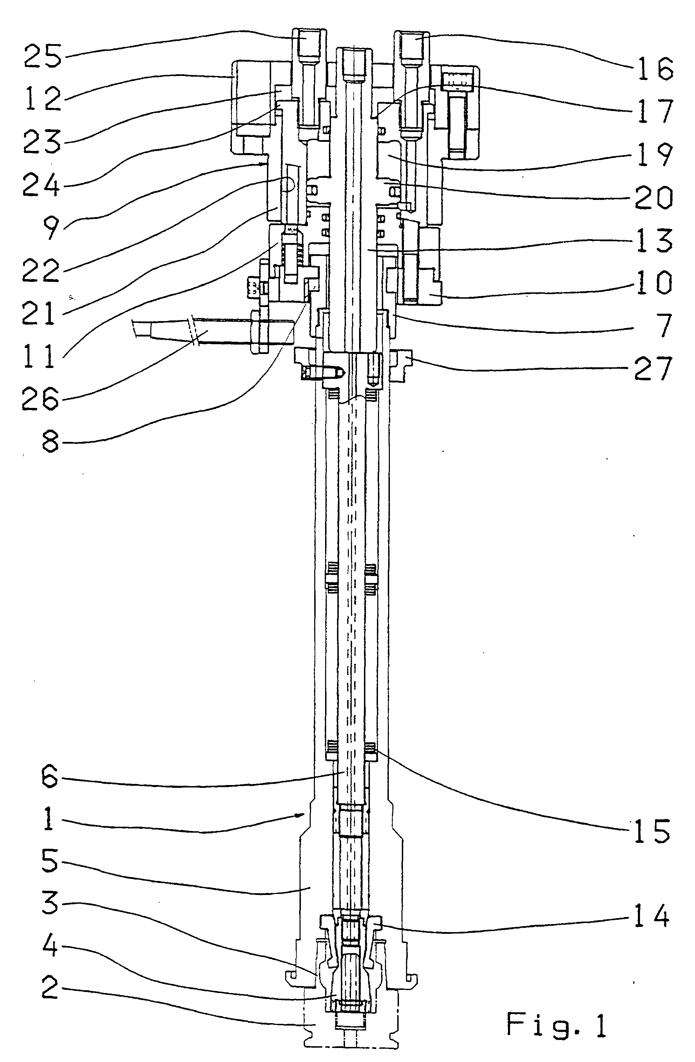

In Fig. 1 ist eine Spannvorrichtung 1 gezeigt, mit der ein Werkzeug oder ein Werkstück 2 gespannt werden kann, das beispielsweise einen Hohlschaftkegel 3, wie in der Zeichnung dargestellt, oder einen Steilkegel aufweist. Die Spannvorrichtung 1 besitzt einen Spannkopf 4, der in einer hohlen Arbeitsspindel 5 in deren axialer Richtung verstellbar geführt ist und zu seiner Verstellung mit einer die Arbeitsspindel 5 durchsetzenden Zugstange 6 verbunden ist. An dem axial dem Spannkopf 4 gegenüberliegenden Ende der Arbeitsspindel 5 ist ein Kupplungsring 7 befestigt, der eine Aufnahme 8 aufweist. An diesem Kupplungsring 7 kann eine Löseeinheit 9 befestigt werden. Diese Löseeinheit 9 weist ein Verriegelungselement 10 auf, das aus einer Verriegelungsstellung, in der es mit dem an der Arbeitsspindel 5 angeordneten Kupplungsring 7 in Eingriff steht, in eine Lösestellung ohne Eingriff verstellt werden kann. Dieses Verriegelungselement 10 ist in einem Gehäuse 11 gelagert. Die Löseeinheit 9 weist weiterhin einen Gehäusedeckel 12 sowie einen Kolben 13 auf.

In der in der Fig. 1 gezeigten Darstellung greifen die Spannklauen 14 des Spannkopfes 4 nicht in den Hohlschaftkegel 3 ein, weil der Kolben 13 axial in Richtung des Spannkopfes 4 verstellt ist und die Zugstange 6 mit dem Spannkopf 4 axial in Richtung des Hohlschaftkegels 3 verstellt sowie dabei ein Tellerfederpaket 15 spannt. Das Verriegelungselement 10 liegt in der Aufnahme 8 an deren Wandung an, so daß durch das dadurch bewirkte Gegenhalten von der Arbeitsspindellagerung keine Kräfte aufgenommen werden müssen.

Um ausgehend von der in der Fig. 1 dargestellten Lage das Werkstück 2 zu spannen, wird der Druckmittelanschluß 16 mit Druck beaufschlagt und so der Kolben 13 verstellt, bis dieser mit einer ersten Anschlagfläche 17 an dem Gehäusedeckel 12 zur Anlage kommt. Der Kolben 13 weist weiterhin noch eine zweite Anschlagfläche 18 auf, an der infolge des in der Zylinderkammer 19 herrschenden Druckes das Gehäuse 11 zur Anlage kommt, das sich gegenüber dem Kolben 13 in entgegengesetzter axialer Richtung verstellt, so daß in der Aufnahme 8 das Verriegelungselement 10 den Kontakt mit der Wandung verliert und eine Mittenstellung einnimmt, die durch den Abstand der ersten Anschlagfläche 17 von der zweiten Anschlagfläche 18 am Kolben 13 definiert ist. Durch die Verschiebung des Kolbens 13 wird die Zugstange 6 von diesem nicht mehr beaufschlagt, so daß diese sich durch das gespannte Tellerfederpaket 15 gleichfalls in der Richtung des Kolbens 13 verstellt und dabei den Spannkopf 4 mitnimmt, der die Spannklauen 14 in den Eingriff mit dem Hohlschaftkegel 3 preßt. Da das Verriegelungselement 10 keinen Kontakt mehr mit dem Kupplungsring 7 hat, kann die Arbeitsspindel 5 in Rotation versetzt werden, ohne daß die Löseeinheit 9 an dieser Rotation teilnehmen muß.

Der Kolben 13 ist durch die Stirnseite des Gehäuses 11 geführt, wobei an dem aus dem Gehäuse 11 herausreichenden Teil des Kolbens 13 die erste Anschlagfläche 17 ausgebildet ist. Die zweite Anschlagfläche 18 ist an einem Ringbund 20 ausgebildet, der dichtend an der im Gehäuse 11 ausgebildeten Zylinderkammer 19 anliegt.

Der Gehäusedeckel 12 übergreift das Gehäuse 11 mit einem Führungsbund 21, an dem auf der radial innenliegenden Seite eine Führungsfläche 22 für das Gehäuse 11 ausgebildet ist und der weiterhin eine in Umfangsrichtung verlaufende Ringnut 23 aufweist, in die das Gehäuse 11 mit einem Kranz 24 eingreift, so daß auch durch das in der Ringnut 23 zur Verfügung stehende Spiel des Kranzes 24 die Verstellung des Gehäuses 11 gegenüber dem Gehäusedeckel 12 begrenzt ist.

Die Druckmittelanschlüsse 17, 25 für die Zylinderkammer 19 sind an der Stirnseite des Gehäuses 11 durch den Gehäusedeckel 12 nach außen geführt.

An dem Gehäuse 11 ist weiterhin ein Lagesensor 26 befestigt, der zur Überprüfung der korrekten Spannung und der korrekten Lage des Verriegelungselementes 10 dient, wobei eine an der Zugstange 6 durch einen ein Langloch der Arbeitsspindel 5 durchsetzenden Stift angeschlossene Scheibe 27 die Referenzlage bildet.

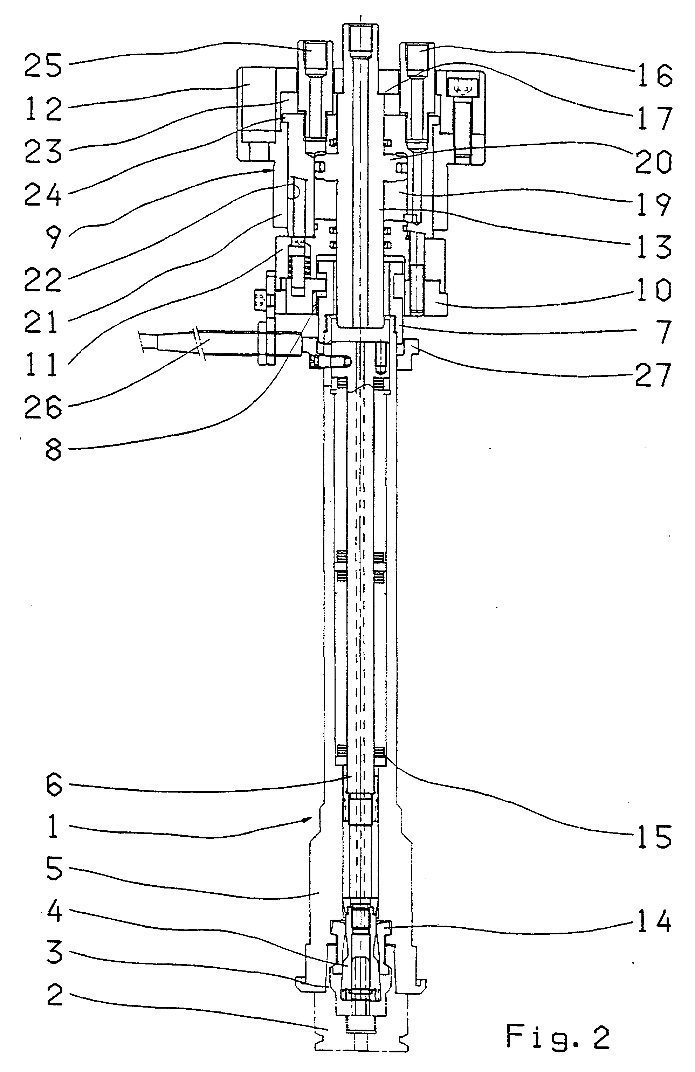

Um ausgehend von der in Fig. 2 gezeigten Spannstellung wieder in die in Fig. 1 gezeigte Position zu gelangen, wird der zweite Druckmittelanschluß 25 mit Druck beaufschlagt, so daß der Kolben 13 sich aus seiner Anlage mit der ersten Anschlagfläche 17 und der zweiten Anschlagfläche 18 an dem Gehäusedeckel 12 und dem Gehäuse 11 löst und das Verriegelungselement 10 durch Verstellung des Gehäuses 11 gegenüber dem Gehäusedeckel 12 in der Aufnahme 8 zur Anlage kommt. Der Kolben 13 verstellt dabei wieder die Zugstange 6 mit dem Spannkopf 4, so daß die Spannklauen 14 außer Eingriff mit dem Hohlschaftkegel 3 des Werkstücks 2 gelangen und das Tellerfederpaket 15 erneut gespannt wird.

## Patentansprüche

1. Löseeinheit einer Vorrichtung zum Betätigen eines in einer Arbeitsspindel (5) geführten, durch eine Zugstange (6) in axialer Richtung der Arbeitsspindel (5) verstellbaren Spannkopfes (4), mit einem der Verstellung der Zugstange (6) dienenden Kolben (13), mit einem Gehäusedeckel (12) und einem gegenüber dem Gehäusedeckel (12) verschiebbaren Gehäuse (11), an dem mindestens ein Verriegelungselement (10) angeordnet ist, das mit Spiel in eine Aufnahme (8) eines mit der Arbeitsspindel (5) verbundenen Kupplungsringes (7) einsetzbar ist, **dadurch gekennzeichnet, daß** der Kolben (13) eine erste, zur Anlage an dem Gehäusedeckel (12) kommende Anschlagfläche (17) und eine zweite, als Anschlag für das Gehäuse (11) dienende Anschlagfläche (18) aufweist, und daß der Abstand der ersten Anschlagfläche (17) und der zweiten Anschlagfäche (18) so bemessen ist, daß bei anliegendem Gehäusedeckel (12) und anliegendem Gehäuse (11) das Verriegelungselement (10) in der Aufnahme (8) eine Mittenstellung einnimmt.

2. Löseeinheit nach Anspruch 1, **dadurch gekennzeichnet, daß** in dem Gehäuse (11) eine Zylinderkammer (19) ausgebildet ist, an der der Kolben (13) mit einem Kolbenbund (20) dichtend anliegt, und daß an dem Kolbenbund (20) die zweite Anschlagfläche (18) ausgebildet ist.

3. Löseeinheit nach Anspruch 1 oder 2, **dadurch gekennzeichnet, daß** der Kolben (13) durch die Stirnseite des Gehäuses (11) geführt und daß an dem aus dem Gehäuse (11) herausreichenden Teil des Kolbens (13) die erste Anschlagfläche (17) ausgebildet ist.

4. Löseeinheit nach einem der Ansprüche 1 bis 3, **dadurch gekennzeichnet, daß** der Gehäusedeckel (12) das Gehäuse (11) mit einem Führungsbund (21) übergreift, an dem auf der radial innen liegenden Seite eine Führungsfläche (22) für das Gehäuse (11) ausgebildet ist.

5. Löseeinheit nach Anspruch 4, **dadurch gekennzeichnet, daß** im Führungsbund (21) eine in Umfangsrichtung verlaufende Ringnut (23) ausgebildet ist, in die das Gehäuse mit einem Kranz (24) eingreift.

6. Löseeinheit nach einem der Ansprüche 2 bis 5, **dadurch gekennzeichnet, daß** an der Stirnseite des Gehäuses (11) die Druckmittelanschlüsse (16, 25) für die Zylinderkammer (19) angeschlossen sind, die durch den Gehäusedeckel (12) nach außen geführt sind.

7. Löseeinheit nach einem der Ansprüche 1 bis 6, **dadurch gekennzeichnet, daß** eine an der Zugstange (6) durch einen ein Langloch der Arbeitsspindel (5) durchsetzenden Stift angeschlossene Scheibe (27) die Referenzlage für einen dem Gehäuse (11) zugeordneten Lagesensor (26) bildet.

8. Verfahren zum Spannen eines Werkstücks (2) oder eines Werkzeugs mittels eines in einer Arbeitsspindel (5) geführten Spannkopfes (4), der durch eine Zugstange (6) in axialer Richtung der Arbeitsspindel (5) verstellt wird, wenn ein der Verstellung der Zugstange (6) dienender Kolben (13) seinerseits in einer in einem Gehäuse (11) ausgebildeten und Druckmittelanschlüsse (16, 25) aufweisenden Zylinderkammer (19) verstellt wird, umfassend die Schritte:
Beaufschlagung des ersten Druckmittelanschlusses (16) und Verschieben des Kolbens (13) gegenüber dem Gehäuse (11) und dem Gehäusedeckel (12) bis dieser mit einer ersten Anschlagfläche (17) an dem Gehäusedeckel (12) zur Anlage kommt, und
Verschieben des Gehäuses (11) gegenüber dem Kolben (13) und dem Gehäusedeckel (12) durch die Druckbeaufschlagung des ersten Druckmittelanschlusses (16) bis das Gehäuse (11) an einer zweiten an dem Kolben (13) ausgebildeten Anschlagfläche (18) zur Anlage kommt und ein an dem Gehäuse (11) angeschlossenes Verriegelungselement (10) als Teil einer Löseeinheit (9) in einer Aufnahme (8) eines mit der Arbeitsspindel (5) verbundenen Kupplungsringes (7) eine Mittenstellung einnimmt.

9. Verfahren zum Lösen eines nach Anspruch 8 gespannten Werkstücks (2) oder Werkzeugs, **dadurch gekennzeichnet, daß** der zweite Druckmittelanschluß (25) mit Druck beaufschlagt wird, sich der Kolben (13) aus seiner Anlage mit der ersten Anschlagfläche (17) und der zweiten Anschlagfläche (18) an dem Gehäusedeckel (12) und dem Gehäuse (11) löst und das Verriegelungselement (10) durch Verstellung des Gehäuses (11) gegenüber dem Gehäusedeckel (12) in der Aufnahme (8) zur Anlage kommt.

## Claims

1. A release unit of an apparatus for actuating a clamping head (4) which is guided in a working spindle (5) and which is displaceable in the axial direction of the working spindle (5) by a pull bar (6), comprising a piston (13) which serves for displacement of the pull bar (6), a housing cover (12) and a housing (11) which is displaceable with respect to the housing cover (12) and on which is arranged at least one locking element (10) which can be inserted with play into a receiving means (8) of a coupling ring (7) connected to the working spindle (5), **characterised in that** the piston (13) has a first abutment surface (17) which comes to bear against the housing cover (12) and a second abutment surface (18) serving as an abutment for the housing (11), and that the spacing of the first abutment surface (17) and the second abutment surface (18) is such that when the housing cover (12) is in contact and the housing (11) is in contact the locking element (10) assumes a central position in the receiving means (8).

2. A release unit according to claim 1 **characterised in that** provided in the housing (11) is a cylinder chamber (19) against which the piston (13) bears sealingly with a piston shoulder (20), and that the second abutment surface (18) is provided on the piston shoulder (20).

3. A release unit according to claim 1 or claim 2 **characterised in that** the piston (13) is guided by the end of the housing (11) and that the first abutment surface (17) is provided at the part of the piston (13) which extends out of the housing (11).

4. A release unit according to one of claims 1 to 3 **characterised in that** the housing cover (12) engages over the housing (11) with a guide shoulder (21) on which, on -the radially inward side, there is provided a guide surface (22) for the housing (11).

5. A release unit according to claim 4 **characterised in that** provided in the guide shoulder (21) is an annular groove (23) which extends in the peripheral direction and into which the housing engages with a collar (24).

6. A release unit according to one of claims 2 to 5 **characterised in that** connected at the end of the housing (11) are the pressure fluid connections (16, 25) for the cylinder chamber (19), which are passed outwardly through the housing cover (12).

7. A release unit according to one of claims 1 to 6 **characterised in that** a disc (27) connected to the pull bar (6) by a pin passing through a slot in the working spindle (5) forms the reference position for a position sensor (26) associated with the housing (11).

8. A method of clamping a workpiece (2) or a tool by means of a clamping head (4) which is guided in a working spindle (5) and which is displaced by a pull bar (6) in the axial direction of the working spindle (5) when a piston (13) serving for the displacement of the pull bar (6) is in turn displaced in a cylinder chamber (19) which is provided in a housing (11) and which has pressure fluid connections (16, 25), including the following steps:
applying pressure at the first pressure fluid connection (16) and displacing the piston (13) with respect to the housing (11) and the housing cover (12) until the latter comes into contact with a first abutment surface (17) on the housing cover (12), and
displacing the housing (11) with respect to the piston (13) and the housing cover (12) by applying pressure at the first pressure fluid connection (16) until the housing (11) comes to bear against a second abutment surface (18) on the piston (13) and a locking element (10) connected to the housing (11) as part of a release unit (9) assumes a central position in a receiving means (8) of a coupling ring (7) connected to the working spindle (5).

9. A method of releasing a tool or workpiece (2) which is clamped according to claim 8 **characterised in that** the second pressure fluid connection (25) is acted upon by pressure, the piston (13) is released from its condition of contact with the first abutment surface (17) and the second abutment surface (18) against the housing cover (12) and the housing (11) and the locking element (10) comes into contact by displacement of the housing (11) with respect to the housing cover (12) in the receiving means (8).

## Revendications

1. Système de désaccouplement d'un dispositif d'actionnement d'une tête de serrage (4) montée dans une broche de travail (5), et pouvant être déplacée dans la direction axiale de ladite broche de travail (5) à l'aide d'une tige de traction (6), avec un piston (13) qui sert à déplacer la tige de traction (6), un couvercle (12) et un corps (11) qui peut coulisser par rapport au couvercle (12) et sur lequel est disposé au moins un élément de verrouillage (10), qui pénètre avec jeu dans un logement (8) d'une bague de couplage (7) solidaire de la broche de travail (5), **caractérisé en ce que** le piston (13) comporte une première surface de butée (17) destinée à venir en appui sur le couvercle (12) et une deuxième surface de butée (18) servant de butée pour le corps (11) et **en ce que** la distance entre la première surface de butée (17) et la deuxième surface de butée (18) est choisie telle que, lorsque le couvercle (12) et le corps (11) sont en appui, l'élément de verrouillage (10) occupe une position médiane dans le logement (8).

2. Système de désaccouplement selon la revendication 1, **caractérisé en ce qu'**une chambre de vérin (19), contre laquelle le piston (13) est en appui étanche par l'intermédiaire d'un collet (20), est prévue dans le corps (11) et **en ce que** la deuxième surface de butée (18) est aménagée sur le collet (20) du piston.

3. Système de désaccouplement selon la revendication 1 ou 2, **caractérisé en ce que** le piston (13) traverse la face frontale du corps (11) en appui étanche par l'intermédiaire d'un collet (20), et **en ce que** la première surface de butée (17) est aménagée sur la partie du piston (13) qui sort du corps (11).

4. Système de désaccouplement selon une des revendications 1 à 3, **caractérisé en ce que** le couvercle (12) recouvre le corps (11) avec un bord de guidage (21), sur la face située radialement à l'intérieur duquel est aménagée une surface de guidage (22) pour le corps (11).

5. Système de désaccouplement selon la revendication 4, **caractérisé en ce qu'**une gorge annulaire (23), qui s'étend dans la direction circonférentielle et dans laquelle le corps pénètre avec une couronne (24) est aménagée dans le bord de guidage (21).

6. Système de désaccouplement selon une des revendications 2 à 5, **caractérisé en ce que** les alimentations en fluide de pression (16, 25) pour la chambre de vérin (19), qui sont amenées à l'extérieur à travers le couvercle (12), sont connectées à la face frontale du corps (11).

7. Système de désaccouplement selon une des revendications 1 à 6, **caractérisé en ce qu'**une bague (27) liée à la tige de traction (6) par l'intermédiaire d'une goupille passant par un trou oblong dans la broche de travail (5), constitue la position de référence pour un détecteur de position (26) associé au corps (11).

8. Procédé de bridage d'une pièce (2) ou d'un outil au moyen d'une tête de serrage (4) montée dans une broche de travail (5), qui est déplacée dans la direction axiale de la broche de travail (5) par une tige de traction (6), lorsqu'un piston (13) servant au déplacement de la tige de traction (6) est déplacé dans une chambre de vérin (19), aménagée dans un corps (11) et pourvue d'entrées (16, 25) de fluide de pression, comprenant les étapes qui consistent à:
- alimenter la première entrée de fluide de pression (16) et déplacer le piston (13) par rapport au corps (11) et au couvercle (12) jusqu'à ce que celui-ci vienne en appui sur une première surface de butée (17) du couvercle (12), et
- déplacer le corps (11) par rapport au piston (13) et au couvercle (12) en alimentant en fluide de pression la première entrée (16) de fluide de pression jusqu'à ce que le corps (11) vienne en appui sur une deuxième surface de butée (18) sur le piston (13) et qu'un élément de verrouillage (10) relié au corps (11) en tant que partie d'un système de désaccouplement (9) prenne une position médiane dans un logement (8) d'une bague de couplage (7) liée à la broche de travail (5).

9. Procédé de débridage d'une pièce (2) ou d'un outil serré conformément à la revendication 8, **caractérisé en ce qu'**on applique une pression à la deuxième entrée de fluide de pression (25), que le piston (13) se décolle de sa position en appui contre la première surface de butée (17) et la deuxième surface de butée (18) sur le couvercle (12) et le corps (11) et que l'élément de verrouillage (10) par déplacement du corps (11) par rapport au couvercle (12) vient en appui dans le logement (8).
